(19) Europäisches Patentamt / European Patent Office / Office européen des brevets

(11) **EP 1 804 025 B1**

(12) **EUROPEAN PATENT SPECIFICATION**

(45) Date of publication and mention
of the grant of the patent:
**30.09.2015 Bulletin 2015/40**

(51) Int Cl.:
***G01C 21/36*** *(2006.01)*          ***G08G 1/0968*** *(2006.01)*
***G08G 1/16*** *(2006.01)*

(21) Application number: **06127242.3**

(22) Date of filing: **27.12.2006**

(54) **Route guidance system and route guidance method**

Routenführungssystem und Routenführungsverfahren

Système et procédé de guidage routier.

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **28.12.2005 JP 2005379920**

(43) Date of publication of application:
**04.07.2007 Bulletin 2007/27**

(73) Proprietor: **Aisin AW Co., Ltd.**
**Fujii-cho**
**Anjo-shi,**
**Aichi 444-1192 (JP)**

(72) Inventors:
• **Oonishi, Shino**
**Okazaki-shi Aichi 444-8564 (JP)**
• **Nakayama, Takaaki**
**Okazaki-shi Aichi 444-8564 (JP)**

(74) Representative: **TBK**
**Bavariaring 4-6**
**80336 München (DE)**

(56) References cited:
**EP-A- 1 548 404     US-A1- 2001 056 326**

**Description**

The present invention relates to a route guidance system and a route guidance method.

In a conventional navigation system, the current position of a vehicle that is a host vehicle, that is, one's current position, is detected by a Global Positioning System (GPS) device, for example. Map data is read out from a data storage portion, and a map screen is formed on a display unit. The host vehicle position, which indicates one's current position, a map of the area surrounding the host vehicle position, and the like are displayed on the map screen. Therefore, a driver can drive the vehicle according to the host vehicle position that is displayed on the map screen.

When the driver inputs a destination and sets search conditions, route search processing is executed based on the search conditions, and a route to the destination from a departure position, which is expressed as the current position, is sought according to the map data. A route that is specified, that is, a specified route, is displayed on the map screen together with the host vehicle position. Guidance along the specified route, that is, route guidance, is executed. Therefore, the driver can drive the vehicle along the specified route that is displayed.

In the navigation system configured as described above, in a case where a plurality of lanes is formed in a road, the lane in which the vehicle is driving, that is, a driving lane, can be specified based on a driving history of lanes driven, local features on the road, and the like.

If the driving lane is specified, the specified route is sought by lane, and route guidance by lane, that is, lane guidance, is executed. For example, a lane that is recommended as the one in which the vehicle should travel is set as a recommended lane, and the vehicle is guided to the recommended lane.

However, in the conventional navigation system, it is sometimes not possible to specify the driving lane based on the driving history, the local features on the road, and the like. In those cases, it becomes impossible to execute appropriate route guidance.

Document EP-A-1 548 404 A1 discloses a navigation apparatus, a navigation system and a navigation method providing guidance for lane changes. This navigation system includes an input device for inputting a destination, a current location detector for detecting current location of the vehicle, a camera for imaging an area to the rear of the vehicle, a route search program for searching for a route to the destination and a controller for providing guidance along the route determined by the route search. The controller controls the imaging by the camera according to route guidance information and determines whether a lane change is required in accordance with information obtained from the image. When it is determined that a lane change is required, the traffic situation in the vicinity surrounding the vehicle is recognized and guidance for the lane change is provided.

It is an object of the present invention to provide a route guidance system and a route guidance method that solve a problem of the conventional navigation system by making it possible to execute appropriate route guidance even in a case where the driving lane cannot be specified.

This object is achieved by a route guidance system according to claim 1 **and a route guidance method according to claim 4**. Advantageous further developments are as set forth in the dependent claims.

According to the present invention, appropriate lane guidance can be executed, even in a case where the driving lane cannot be specified, because the route guidance system infers whether or not the host vehicle is in the recommended lane, based on image data of lane demarcation lines; assumes that the lane in which the host vehicle is driving is the driving lane, based on the inference results; and executes lane guidance based on the assumed driving lane.

FIG. 1 is a diagram showing a navigation system according to an embodiment of the present invention;

FIG. 2 is a first diagram showing a driving lane specification method according to the embodiment of the present invention;

FIG. 3 is a second diagram showing the driving lane specification method according to the embodiment of the present invention;

FIG. 4 is a flowchart showing the operation of a guidance processing portion according to the embodiment of the present invention;

FIG. 5 is a first diagram showing a driving state of a vehicle according to the embodiment of the present invention;

FIG. 6 is a first diagram showing a lane-straddling state according to the embodiment of the present invention;

FIG. 7 is a second diagram showing a lane-straddling state according to the embodiment of the present invention;

FIG. 8 is a third diagram showing a lane-straddling state according to the embodiment of the present invention;

FIG. 9 is a second diagram showing a driving state of a vehicle according to the embodiment of the present invention;

FIG. 10 is a diagram showing a display state for a host vehicle position according to the embodiment of the present invention;

FIG. 11 is a third diagram showing a driving state of a vehicle according to the embodiment of the present invention;

FIG. 12 is a fourth diagram showing a driving state of a vehicle according to the embodiment of the present invention;

FIG. 13 is a fifth diagram showing a driving state of a vehicle according to the embodiment of the present invention; and

FIG 14 is a sixth diagram showing a driving state of a vehicle according to the embodiment of the present invention.

An embodiment of the present invention will be explained below with reference to the drawings. Note that in this case, the navigation system is explained as a route guidance system.

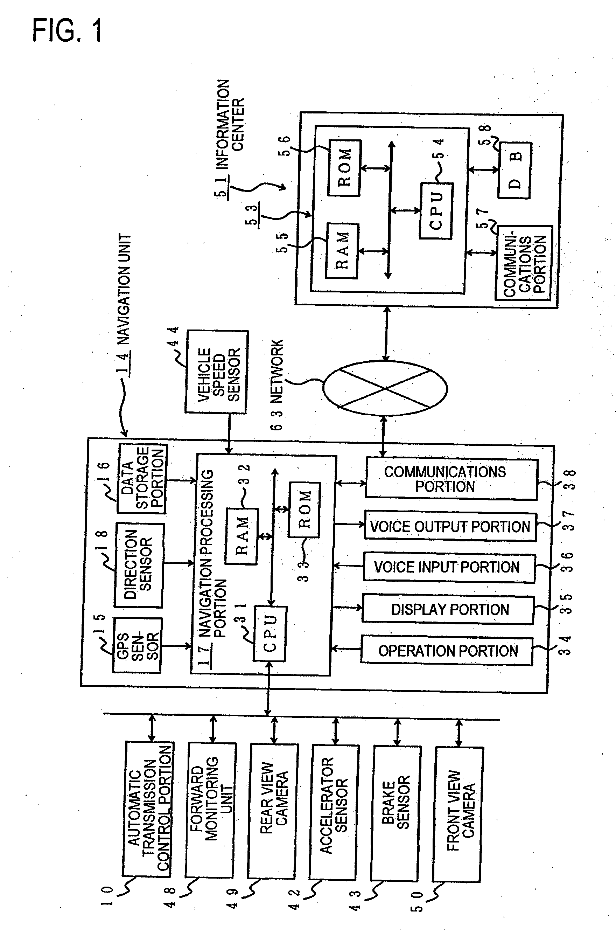

FIG. 1 is a diagram showing a navigation system according to the embodiment of the present invention.

In FIG. 1, the reference numeral 10 denotes an automatic transmission control portion that serves as a power train control portion. The automatic transmission control portion 10 controls a power train that shifts gears at a prescribed gear ratio, such as a continuously variable transmission (CVT) that serves as an automatic transmission, a stepped transmission (automatic transmission), an electric drive unit, or the like.

The reference numeral 14 denotes a navigation unit that serves as an information terminal, such as an on-board unit that is mounted in a vehicle. The reference numeral 63 denotes a network, and the reference numeral 51 denotes an inform center that serves as an information provider. A navigation system is made up of the automatic transmission control portion 10, the navigation unit 14, the network 63, the information center 51, and the like.

The navigation unit 14 includes a Global Positioning System (GPS) sensor 15, a data storage portion 16, a navigation processing portion 17, a direction sensor 18, an operation portion 34, a display portion 35, a voice input portion 36, a voice output portion 37, and a communications portion 38. The GPS sensor 15 serves as a current position detection portion that detects the current position of the host vehicle. The data storage portion 16 serves as an information storage portion where map data and various other types of data are stored. The navigation processing portion 17 carries out various types of computational processing, such as navigation processing and the like, based on information that is input. The direction sensor 18 serves as a direction detection portion that detects the vehicle's direction. The operation portion 34 serves as a first input portion, by operating which the driver, who is the operator, makes a prescribed input. The display portion 35 serves as a first output portion that uses images displayed on a screen not shown in FIG. 1 to express various types of information and notify the driver. The voice input portion 36 serves as a second input portion for making a prescribed input by voice. The voice output portion 37 serves as a second output portion that uses voice to express various types of information and notify the driver. The communications portion 38 serves as a transmitting and receiving portion that functions as a communications terminal. The GPS sensor 15, the data storage portion 16, the direction sensor 18, the operation portion 34, the display portion 35, the voice input portion 36, the voice output portion 37, and the communications portion 38 are connected to the navigation processing portion 17.

Also connected to the navigation processing portion 17 are the automatic transmission control portion 10, a forward monitoring unit 48, a rear view camera (rear monitoring camera) 49, a front view camera (forward monitoring camera) 50, an accelerator sensor 42, a brake sensor 43, a vehicle speed sensor 44, and the like. The forward monitoring unit 48 is installed at a prescribed location on the front end of the vehicle and monitors the area in front of the vehicle. The rear view camera 49 is installed at a prescribed location on the rear end of the vehicle and serves as a photography unit that captures images of the area behind the vehicle and as a rear monitoring unit. The front view camera 50 is installed at a prescribed location on the front end of the vehicle and serves as a photography unit that captures images of the area in front of the vehicle and as a forward monitoring unit. The accelerator sensor 42 serves as an engine load detection portion that detects the driver's operation of an accelerator pedal not shown in FIG. 1, based on the accelerator angle. The brake sensor 43 serves as a braking detection portion that detects the driver's operation of a brake pedal not shown in FIG. 1, based on the amount by which the pedal is depressed. The vehicle speed sensor 44 serves as a vehicle speed detection portion that detects the vehicle speed. Note that the accelerator sensor 42, the brake sensor 43, and the like make up an operation information detection portion that detects information on the operation of the vehicle by the driver. It is also possible to use various types of cameras, such as side cameras or the like, as photography units to monitor the areas to the sides of the vehicle.

The GPS sensor 15 detects the vehicle's current position on the Earth, as well as the time, by receiving radio waves generated by a satellite. In this embodiment, the GPS sensor 15 is used as the current position detection portion, but a distance sensor, a steering sensor, an altimeter, or the like not shown in FIG. 1 can also be used individually or in combination instead of the GPS sensor 15. A gyroscopic sensor, a geomagnetic sensor, or the like can be used as the direction sensor 18. Note that in this embodiment, the direction sensor 18, the vehicle speed sensor 44, and the like are installed, but where a GPS sensor having functions to detect the host vehicle direction, the vehicle speed, and the like is used, the direction sensor 18, the vehicle speed sensor 44, and the like are not necessary.

The data storage portion 16 is provided with a map data base made up of map data files, and map data is stored in the map data base. The map data includes intersection data pertaining to intersections, node data pertaining to nodes, road data pertaining to road links, search data that is processed for searching, facilities data pertaining to facilities, and the like, as well as local feature data pertaining to local features.

The local features are made up of displays installed or formed on the road to provide various kinds of driving-related information and guidance to drivers. These displays include marking lines, indicators, pedestrian crosswalks, manhole covers, traffic signals, and the like. Marking lines include stop lines on the road to stop vehicles, lane demarcation lines that are formed to delineate the boundaries of lanes on the road, demarcation lines that delineate parking spaces, and the like. Indicators include lane differentiation indicators in the form of arrows that are formed in each lane to indicate the direction of travel in the lane, and guidance indicators, such as the word "Stop" and the like, which warn of an approaching location where the vehicle must stop momentarily (including a point of entry into a priority road from a non-priority road, a railroad crossing, an intersection where a red signal flashes, and the like). Guidance indicators may also include phrases such as "To (place name)" and the like that are formed in a lane and provide directional guidance in the lane. Lane demarcation lines include road boundary lines that are formed as solid lines on a shoulder side of the road and on a side toward an oncoming traffic lane, as well as lane boundary lines that are formed as broken lines between individual lanes in an area bounded by road boundary lines.

The local feature data include position information, which describes the position of each feature in terms of coordinates and the like, image information, which shows an image of each feature, and other information. Note that where a radio wave beacon unit, an optical beacon unit, or the like, which will be explained later, is treated as a local feature, current traffic information is sent to the vehicle using a different signal for each lane. Therefore, the signals that are sent from the radio wave beacon unit, the optical beacon unit, or the like are included in the local feature data.

The road data pertaining to the lanes include lane data (lane information), including a number of lanes, which expresses the number of lanes on the road, a lane number that is assigned to each lane on the road, lane position information, and the like. Note that the lane data also includes information concerning a bus lane, that is, bus lane information, and information concerning a reversible lane, that is, reversible lane information.

Note that data are also stored in the data storage portion 16 in order for the voice output portion 37 to output prescribed information.

A statistical data base made up of statistical data files and a driving history data base made up of driving history data files are also stored in the data storage portion 16. The statistical data in the statistical data files and the driving history data in the driving history data files are stored as actual results data.

The statistical data is actual traffic information provided in the past, that is, historical information that describes a history. Traffic information provided in the past by traffic information centers and the like (not shown in FIG. 1) as information providers, such as the Vehicle Information and Communication System (VICS) center and the like, traffic census information, which is data on traffic volumes from traffic censuses for example provided by authorities like the Ministry of Land Infrastructure and Transport, and road timetable information and the like, also provided, for example, by authorities like the Ministry of Land Infrastructure and Transport, are used individually or in combination. The statistical data is created by refining the information as necessary, then carrying out statistical processing. Note that congestion forecasting information and the like for forecasting congestion and other purposes can also be added. In that case, when the statistical data is created, detailed conditions are added to the historical information, such as information on dates and times, days of the week, weather, various types of events, seasons of the year, facilities (the presence or absence of department stores, supermarkets, and the like), and the like.

Also, the data items in the statistical data are made up of link numbers for various road links, direction flags to indicate the direction of travel, information classifiers that show the type of information, degrees of congestion at specific times, link required times that describe the times required to travel on various road links at specific times, data on link required times averaged for each day of the week (for example, average time for Wednesday), and the like.

The driving history data is made up of information collected by the information center 51 from a plurality of vehicles, i.e., the host vehicle and other vehicles, and represents actual driving records of vehicles traveling on roads where each vehicle has traveled. That is, it is actual history information that describes driving records, and based on the driving data, probe data is computed and accumulated.

The data items in the driving history data are made up of link required times at specific times when vehicles traveled on each road link, degrees of congestion at specific times when vehicles traveled on each road link, and the like. Note that the driving history data can be added to the statistical data. In this embodiment, the degree of congestion is used as a congestion indicator that expresses the scale of congestion. Congestion, crowding, and non-congestion are expressed separately.

In order to store the various types of data, the data storage portion 16 includes a disk not shown in FIG. 1, such as a hard disk, a CD, a DVD, an optical disk, or the like. The data storage portion 16 also includes a read/write head or the like for reading and writing the various type of data. It is also possible to use a memory card or the like for the data storage portion 16. Note that an external storage device is formed by the various disks, the memory card, or the like.

In this embodiment, the map data base, the statistical data base, the driving history data base, and the like are built in the data storage portion 16, but the map data base, the statistical data base, the driving history data base, and the like can also be built in the information center 51.

The navigation processing portion 17 includes a CPU 31, a RAM 32, a ROM 33, and a flash memory that is not shown in FIG. 1. The CPU 31 serves as a control device that controls the entire navigation unit 14 and as a computation device. The RAM 32 is used as working memory when the CPU 31 performs various types of computational processing. The ROM 33 contains a control program, as well as various types of programs that search for routes to destinations, execute route guidance, and so on. The flash memory is used to store various types of data, programs, and the like. Note that an internal storage device is formed by the RAM 32, the ROM 33, the flash memory, or the like.

In this embodiment, various types of programs can be stored in the ROM 33, and various types of data can be stored in the data storage portion 16, but programs, data, and the like can also be stored on a disk or the like. In that case, programs, data, and the like that are read from the disk or the like can be written to the flash memory. The programs, data, and the like can therefore be updated by replacing the disk or the like. The control programs, data, and the like of the automatic transmission control portion 10 can also be stored on the disk or the like. The programs, data, and the like can be received through the communications portion 38 and written to the flash memory in the navigation processing portion 17.

The operation portion 34 executes such tasks as correcting the current position when the vehicle starts to move, inputting a departure point and a destination, inputting points to be passed, and operating the communications portion 38, all according to the driver's operations. The operation portion 34 can use a keyboard, mouse, or the like that is installed independently of the display portion 35. The operation portion 34 can also use a touch panel that is capable of executing prescribed input operations that are done by touching or clicking on an image operation portion, such as various types of keys, switches, buttons, and the like that are displayed as images on a screen that is formed by the display portion 35.

The display portion 35 is used as a display. Also, the various screens that are formed on the display portion 35 can display the vehicle's current position as the host vehicle's position; the vehicle's direction as the host vehicle's direction; maps, the specified route, guidance information along the specified route, traffic information, and the like; the distance to the next intersection on the specified route and the direction of travel at the next intersection. The screens can also display operation guidance, operation menus, and key guidance for the image operation portion, the operation portion 34, the voice input portion 36, and the like. The screens can also display programs and the like that are broadcast by FM multiplex.

The voice input portion 36 includes a microphone that is not shown in FIG. 1 and can input required information by voice. The voice output portion 37 includes a voice synthesizing unit and a speaker, which are not shown in FIG. 1. The voice output portion 37 outputs the specified route, the guidance information, the traffic information, and the like by means of a voice that is synthesized by the voice synthesizing unit, for example.

The communications portion 38 includes a beacon receiver and an FM receiver for receiving various types of the information, such as current traffic information that is transmitted from the traffic information center, general information, and the like. The beacon receiver receives the information as radio wave signals or optical signals via radio wave beacons or optical beacons installed along the road. The FM receiver receives the information as FM multiplex broadcasts via an FM broadcast station. Note that the traffic information includes congestion information, regulatory information, parking space information, traffic accident information, service area congestion status information, and the like. The general information includes news, weather forecasts, and the like. The beacon receiver and the FM receiver are combined in a single VICS receiver, but they can also be installed separately.

The traffic information contains an information classification that defines the type of information, a mesh number that specifies a mesh, a link number that specifies a road link connecting two points (e.g., two intersections) and also distinguishes between inbound and outbound halves of the road, link information that constitutes the content of the information that is provided for the corresponding link number. For example, if the traffic information is congestion information, the link information is made up of congestion leading edge data, which tells the distance from the start of the road link to the leading edge of the congestion; the degree of congestion; a congestion length, which tells the distance from the leading edge of the congestion to its trailing edge; the link required time, which tells the time required to travel the road link; and so on.

The communications portion 38 can also receive map data, statistical data, driving history data, and the like, as well as various types of the information such as traffic information, general information, and the like, via the network 63.

For that reason, the information center 51 includes a server 53, a communications portion 57 connected to the server 53, a data base 58 that serves as an information storage portion, and so on. The server 53 includes a CPU 54, a RAM 55, and a ROM 56. The CPU 54 serves as a control device and as a computation device. The data base 58 stores the same sort of data that is stored in the data storage portion 16, such as map data statistical data, and driving history data, for example. The information center 51 can also provide in real time various types of the information, such as current traffic information that is transmitted from the traffic information center, general information, and the like, as well as driving history data that is collected from a plurality of vehicles (the host vehicle and other vehicles).

The forward monitoring unit 48 is made up of a radar, such as a laser radar, a millimeter-wave radar, or the like, or an ultrasonic sensor or the like, or a combination of a radar or the like and an ultrasonic sensor or the like. The forward monitoring unit 48 monitors a vehicle that is traveling ahead of the host vehicle, that is, a vehicle ahead, and also monitors momentary stopping points, obstacles, and the like. The forward monitoring unit 48 also detects the relative speed, which is the vehicle speed relative to the vehicle ahead, the approach speed in relation to momentary stopping points, the approach speed in relation to obstacles, the distance to the vehicle ahead, the time to the vehicle ahead, and the like, all as information about the area around the host vehicle.

The rear view camera 49 is made up of a CCD device and is mounted so that its optical axis tilts downward in order to monitor the area behind the vehicle. In addition to the local features, the subjects for image capture include a vehicle behind, which is a vehicle traveling behind the host vehicle, buildings and other structures on the roadside, and the like. The rear view camera 49 generates image data of the photographed subjects and sends the data to the CPU 31. In the same manner the front view camera 50 is made up of a CCD device and is mounted so that its optical axis tilts downward in order to monitor the area in front of the vehicle. In addition to the local features, the subjects for image capture include a vehicle ahead, which is a vehicle traveling in front of the host vehicle, buildings and other structures on the roadside, guidance indicators installed above the road that use arrows to indicate the direction of travel in each lane, and the like. The front view camera 50 generates image data of the photographed subjects and sends the data to the CPU 31. The CPU 31 reads the image data and executes image processing on the image data to recognize individual photographed subjects as recognized objects. In this embodiment, a CCD device is used as the rear view camera 49 and as the front view camera 50, but a C-MOS device or the like can be used.

Note that the navigation system, the control portion 10, the navigation processing portion 17, the CPUs 31, 54, the server 53, and the like function as computers, independently or in combinations of two or more, and execute computational processing based on various types of programs, data, and the like. Also, storage media are made up of the data storage portion 16, the RAMs 32, 55, the ROMs 33, 56, the data base 58, the flash memories, and the like. Also, microprocessors or the like can be used as computation devices in place of the CPUs 31, 54.

Next, the basic operation of the navigation system described above will be explained.

First, when the driver operates the operation portion 34 and the navigation unit 14 starts up, a navigation initialization processing portion (not shown in FIG 1) of the CPU 31 executes navigation initialization processing, reads the current position of the host vehicle detected by the GPS sensor 15, reads the host vehicle direction detected by the direction sensor 18, and initializes various types of data. Next, a matching processing portion (not shown in FIG. 1) of the CPU 31 executes matching processing, reads the current position, and specifies the current position by judging on which road link the current position lies, based on the track of the current position that was read, the shapes and arrangement of the various road links that make up the roads in the vicinity of the current position, and so on.

Also, in this embodiment, the matching processing portion further specifies the current position based on the positions of various local features that are photographed subjects photographed by the rear view camera 49.

For that purpose, an image recognition processing portion of the CPU 31, not shown in FIG. 1, executes image recognition processing, reading in image data from the rear view camera 49 and recognizing a local feature in an image formed from the image data. Also, a distance computation processing portion of the CPU 31, not shown in FIG. 1, executes distance computation processing, computing a distance from the rear view camera 49 to the actual local feature, based on the position of the local feature in the image. A current position specification processing portion of the matching processing portion executes current position specification processing, reading in the distance to the local feature and reading local feature data from the data storage portion 16 to obtain the coordinates of the local feature, then specifying the current position based on the coordinates and the distance to the local feature. Note that it is also possible to specify the current position based on a position of a local feature that is photographed by the front view camera 50, instead of by the rear view camera 49.

A lane specification processing portion of the CPU 31, not shown in FIG. 1, executes lane specification processing, specifying the driving lane based on a driving history of lanes driven or based on a local feature or the like that is recognized based on the image data or, as necessary, specifying the driving lane based on a result of checking the local feature against the local feature data that are read from the data storage portion 16. The driving lane can also be specified based on results of detecting the current position by using the highly precise GPS sensor 15.

Note that that where the local feature is made of a strongly magnetic substance such as steel or the like, as in the case of a manhole cover or the like, the lane specification processing portion can read a sensor output from the geomagnetic sensor, determine whether or not a manhole cover or the like is present based on the sensor output, and specify the driving lane based on the results of the determination. Also, as necessary, the driving lane can be specified by combining the sensor output from the geomagnetic sensor, the current position, and the like at the same time that image processing is executed on the image data of the marking lines.

A basic information acquisition processing portion of the CPU 31, not shown in FIG. 1, executes basic information acquisition processing, obtaining map data from the data storage portion 16 or receiving map data from the information center 51 or the like via the communications portion 38. Note that when map data is obtained from the information center 51 or the like, the basic information acquisition processing portion writes the received data to the flash memory.

A display processing portion of the CPU 31, not shown in FIG. 1, executes display processing, forming various types of screens on the display portion 35. For example, a map display processing portion of the display processing portion executes map display processing, forming a map display screen on the display portion 35 that displays the current position as the host vehicle position and the vehicle direction as the host vehicle direction, while also displaying maps of the areas surrounding the map screen.

Therefore, the driver is able to drive the vehicle according to the map, the host vehicle position, and the host vehicle direction.

When the driver operates the operation portion 34 to input a destination, a destination setting processing portion of the CPU 31, not shown in FIG. 1, executes destination setting processing and sets the destination. Note that the departure point can also be input and set as necessary. It is also possible to register a given location in advance, then set the registered location as the destination. When the driver operates the operation portion 34 to input a search condition, a search condition setting processing portion of the CPU 31, not shown in FIG. 1, executes search condition setting processing and sets the search condition.

When the destination and search condition are set in this manner, a route search processing portion of the CPU 31, not shown in FIG 1, executes route search processing. The route search processing portion reads the current position, the destination, the search condition, and the like, and also reads search data and the like from the data storage portion 16. Based on the current position, the destination, and the search data, the route search processing portion searches for a route from the departure point, expressed as the current position, to the destination, according to the search condition. The route search processing portion outputs route data that describe the specified route. The specified route is the route for which the total of the link costs assigned to each road link is the lowest.

Also, if a plurality of lanes are formed in the road, and if the driving lane has been specified, the route search processing portion specifies individual lanes in the specified route. In that case, the lane numbers of the driving lanes and the like are included in the route data.

Note that route search processing can be executed at the information center 51. In that case, the CPU 31 transmits the current position, the destination, the search condition, and the like to the information center 51. When the information center 51 receives the current position, the destination, the search condition, and the like, a route search processing portion of the CPU 54, not shown in FIG. 1, executes route search processing in the same manner as CPU 31. The route search processing portion reads search data from the data base 58 and based on the current position, the destination, and the search data, searches for a route from the departure point to the destination, according to the search condition. The route search processing portion outputs route data that describe the specified route. Next, a transmission processing portion of the CPU 54, not shown in FIG 1, executes transmission processing, transmitting the route data to the navigation unit 14.

Next, a guidance processing portion of the CPU 31, not shown in FIG 1, executes guidance processing and provides route guidance. For this purpose, a route display processing portion of the guidance processing portion executes route display processing, reading the route data and displaying the specified route on the map screen according to the route data.

Incidentally, when the vehicle must turn right or left at a prescribed intersection, the intersection is set as a guidance point and as a guidance intersection for route guidance.

For that purpose, a guidance intersection setting processing portion of the guidance processing portion executes guidance intersection setting processing. The guidance intersection setting processing portion determines, according to the route data, that is, based on the specified route, whether or not there is an intersection where the vehicle must turn right or left. If there is an intersection where the vehicle must turn right or left, the intersection is set as a guidance intersection.

When individual lanes have been specified in the specified route, a recommended lane setting processing portion of the guidance processing portion executes recommended lane setting processing, selecting lanes that are recommended as the ones in which the vehicle should travel and setting them as the recommended lanes. For example, when the vehicle passes through a guidance intersection, the recommended lane setting processing portion selects and sets a suitable lane for entering the guidance intersection, a suitable lane for exiting the guidance intersection, and so on. Also, the route display processing portion, in addition to displaying the specified route on the map screen, displays an enlarged map of the road where the vehicle is traveling, that is, an enlarged road map, in a specified area of the map screen and uses the enlarged road map to provide lane guidance. In this case, each lane, as well as each specifically recommended lane, is displayed on the enlarged road map.

Next, a voice output processing portion of the guidance processing portion executes voice output processing, outputting route guidance by voice from the voice output portion 37. For this purpose, a route guidance point setting processing portion of the voice output processing portion executes route guidance point setting processing, setting one or more route guidance points at locations at pre-set distances before the guidance intersection on the specified route (i.e., on the side of the guidance intersection where the host vehicle is located). Also, a point guidance processing portion of the guidance processing portion executes point guidance processing. When the vehicle arrives at a route guidance point, route guidance is provided for the guidance intersection in the form of voice phrases with a content that is set in advance for each of the route guidance points, such as the distance from the host vehicle position to the guidance intersection, whether the vehicle turns left or right at the guidance intersection, and the like. Also, if the recommended lane has been set, a lane guidance processing portion of the guidance processing portion executes lane guidance processing, providing lane guidance in the form of voice phrases with a content that is set in advance for each of the route guidance points, such as each recommended lane from the host vehicle position to the guidance intersection, the recommended lane beyond the guidance intersection, and the like. Also, in a case where the driving lane is different from the recommended lane, the lane guidance processing portion guides the vehicle from the driving lane to the recommended lane. Therefore, it is possible for the driver to drive the vehicle in the recommended lane.

Also, an enlarged guidance point map display processing portion of the guidance processing portion executes enlarged guidance point map display processing. The enlarged guidance point map display processing portion reads the intersection data and, before the vehicle arrives at the guidance intersection, displays an enlarged map of the guidance intersection, that is, an enlarged intersection map, in a specified area of the map screen, using the enlarged intersection map to provide route guidance. In this case, a map of the area surrounding the guidance intersection, the specified route, and landmarks such as facilities and the like at the guidance intersection are displayed on the enlarged intersection map. Also, in a case where a plurality of lanes is formed in the road by which the vehicle enters the guidance intersection (hereinafter called the entry road) or in the road by which the vehicle exits the guidance intersection (hereinafter called the exit road) and lane guidance is executed, the enlarged guidance point map display processing portion displays the recommended lanes on the enlarged intersection map. For that purpose, the intersection data includes an intersection name, the entry road, the exit road, the presence or absence of a traffic signal, the type of traffic signal, and the like.

Incidentally, as explained earlier, the lane specification processing portion specifies the driving lane based on a driving history of lanes driven or based on a local feature or the like that is recognized based on the image data or, as necessary, specifies the driving lane based on the result of checking the local feature against the local feature data that are read from the data storage portion 16.

However, it is sometimes not possible to specify the driving lane based on the driving history, a local features, and the like.

For example, in a case where the driving lane is specified based on the driving history, it might become impossible to specify the driving lane as the vehicle passes through an intersection, turns right or left, or goes straight ahead, because no lane demarcation lines are formed in the intersection. Also, in a case where the number of driving lanes on a road increases, it might become impossible to specify the driving lane, because the lane demarcation lines change. Moreover, it might become impossible to specify the driving lane even in a case where the vehicle is driving without moving between lanes.

Also, in a case where the driving lane is specified based on a local feature or the like, it might become impossible to specify the driving lane if the image data cannot be used because there are no local features particular to a lane. It might also become impossible to specify the driving lane in a case where there is no radio wave beacon, optical beacon, or the like, because it is not possible to use local feature data.

Therefore, it is conceivable to specify the driving lane based on the relationship between the road boundary lines and the lane boundary lines among the lane demarcation lines.

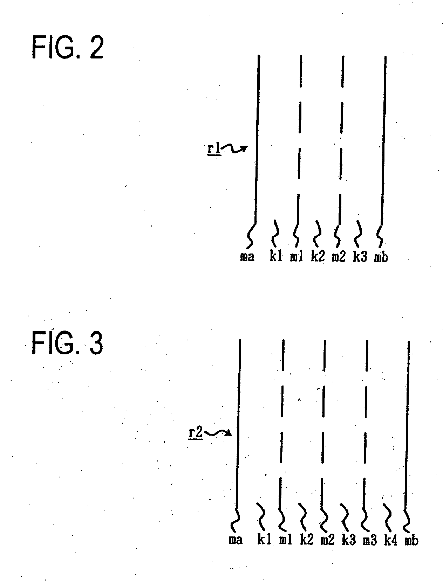

FIG. 2 is a first diagram showing a driving lane specification method according to the embodiment of the present invention. FIG. 3 is a second diagram showing the driving lane specification method according to the embodiment of the present invention.

In the diagrams, the reference symbols r1, r2 denote roads, the reference symbols k1 to k4 denote lanes, the reference symbol ma denotes road boundary lines that are formed as solid lines on the shoulder sides of the roads, the reference symbol mb denotes road boundary lines that are formed as solid lines on the sides toward the oncoming traffic lanes, the reference symbols m1 to m3 denote lane boundary lines that are formed as broken lines between lanes k1, k2, between lanes k2, k3, and between lanes k3, k4. Lane demarcation lines are made up of the road boundary lines ma, mb and lane boundary lines m1 to m3.

For example, on the three-lane road r1, which has three lanes, the road boundary lines ma, mb are formed as solid lines on the shoulder side of the road and the side toward the oncoming traffic lane. The two lane boundary lines m1, m2 are formed as broken lines between the road boundary lines ma, mb. Therefore, if the road boundary line ma and the lane boundary line m1 are recognized based on the image data of the lane demarcation lines, the lane k1 can be specified as the driving lane. If the lane boundary lines m1, m2 are recognized, the lane k2 can be specified as the driving lane. If the lane boundary line m2 and the road boundary line mb are recognized, the lane k3 can be specified as the driving lane.

Also, on the four-lane road r2, which has four lanes, the road boundary lines ma, mb are formed as solid lines on the shoulder side of the road and the side toward the oncoming traffic lane. The three lane boundary lines m1 to m3 are formed as broken lines between the road boundary lines ma, mb. Therefore, if the road boundary line ma and the lane boundary line m1 are recognized based on the image data of the lane demarcation lines, the lane k1 can be specified as the driving lane, because the road boundary line ma is a solid line and the lane boundary line m1 is a broken line. If the lane boundary line m3 and the road boundary line mb are recognized, the lane k4 can be specified as the driving lane, because the lane boundary line m3 is a broken line and the road boundary line mb is a solid line. In contrast to these situations, if the lane boundary lines m1, m2 are recognized, or if the lane boundary lines m2, m3 are recognized, it is not clear whether the lane k2 or the lane k3 is the driving lane, because the lane boundary lines m1, m2 and the lane boundary lines m2, m3 are all broken lines. Therefore, it is not possible to specify the lane k2 or the lane k3 as the driving lane.

Thus, based on the relationship between the road boundary lines ma, mb and the lane boundary lines m1 to m3, the lane specification processing portion is able to specify the lanes k1 to k3 as the driving lane on the three-lane road r1 and to specify the lanes k1, k4 as the driving lane on the four-lane road r2.

However, on the three-lane road r1, it is not possible to specify the driving lane if the vehicle is straddling the lanes k1, k2 or is straddling the lanes k2, k3. On the four-lane road r2, it is not possible to specify the driving lane if the vehicle is in the lanes k2, k3 outside the driving lanes k1, k4, is straddling the lanes k1, k2, is straddling the lanes k2, k3, or is straddling the lanes k3, k4.

Therefore, in this embodiment, in a case where the lane specification processing portion cannot specify the driving lane, the guidance processing portion assumes that the lane in which the host vehicle is driving is the driving lane and executes lane guidance based on the assumed driving lane.

A case where the driving lane is assumed on the three-lane road r1 will be explained first.

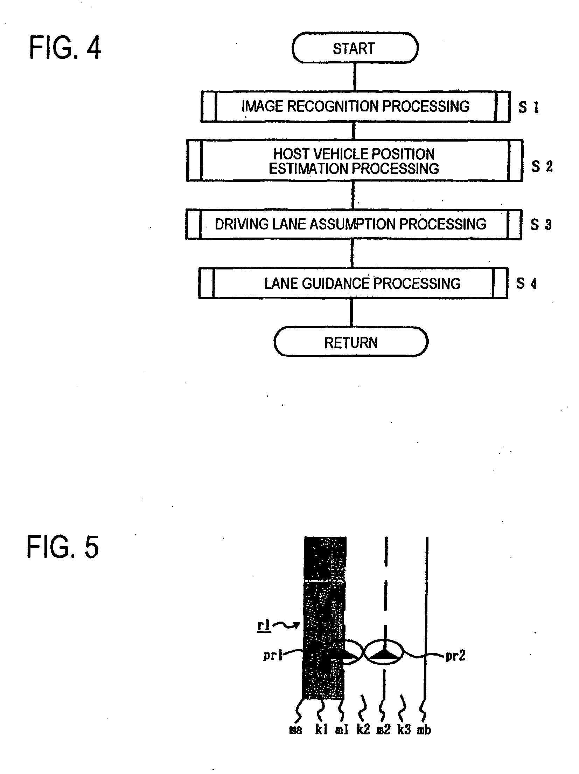

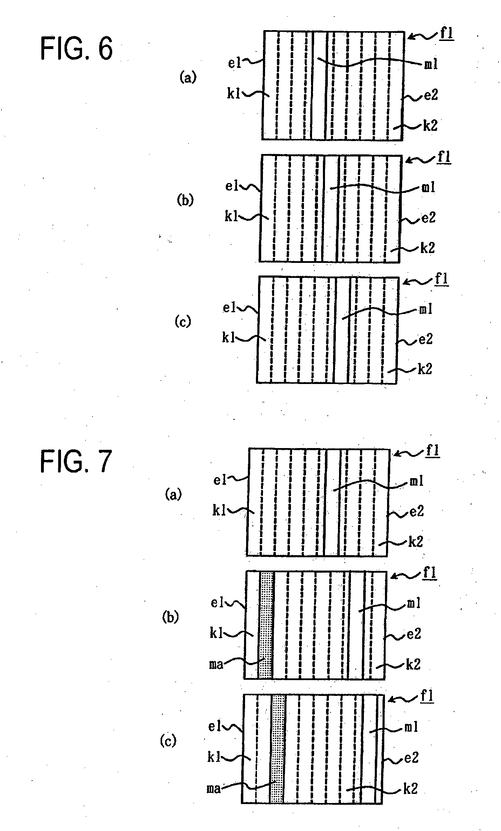

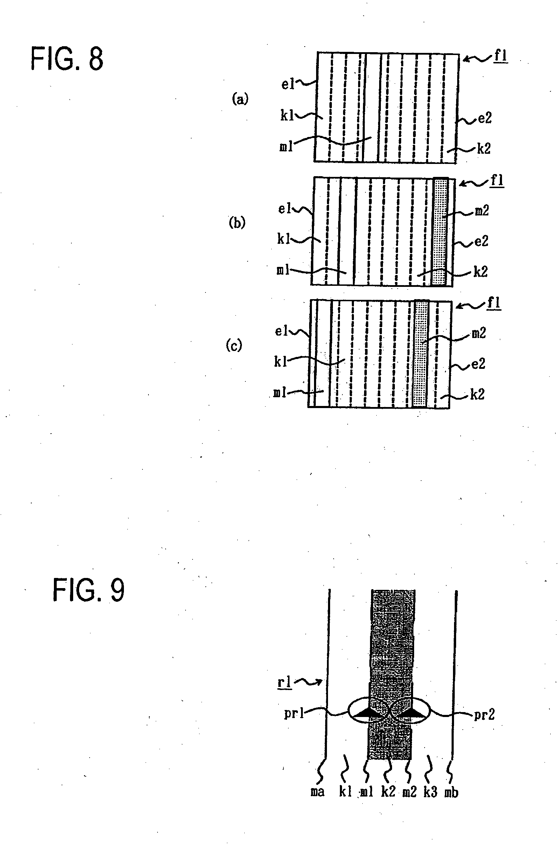

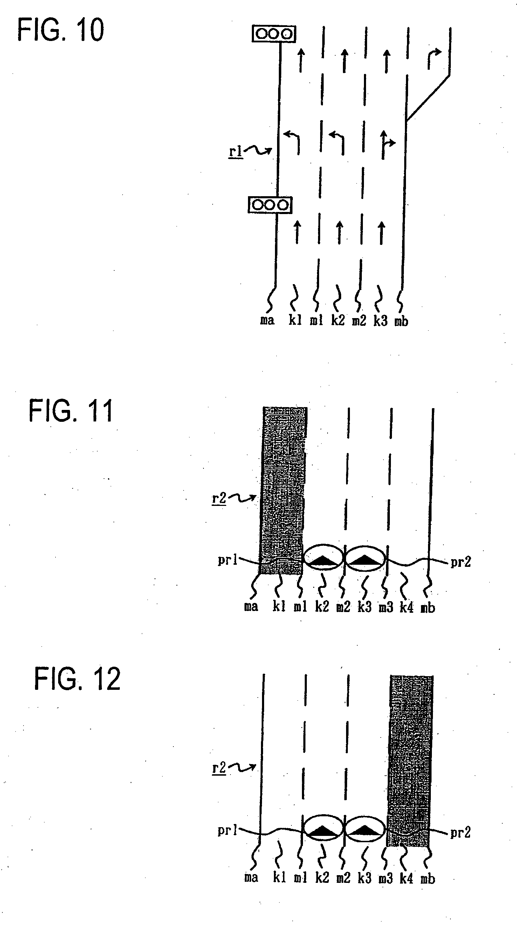

FIG. 4 is a flowchart showing the operation of a guidance processing portion according to the embodiment of the present invention. FIG. 5 is a first diagram showing a driving state of a vehicle according to the embodiment of the present invention. FIG. 6 is a first diagram showing a lane-straddling state according to the embodiment of the present invention. FIG. 7 is a second diagram showing a lane-straddling state according to the embodiment of the present invention. FIG 8 is a third diagram showing a lane-straddling state according to the embodiment of the present invention. FIG. 9 is a second diagram showing a driving state of a vehicle according to the embodiment of the present invention. FIG. 10 is a diagram showing a display state for a host vehicle position according to the embodiment of the present invention.

In the diagrams, the reference symbol r1 denotes a road, the reference symbols k1 to k3 denote lanes, the reference symbols pr1, pr2 denote host vehicle positions, the reference symbols ma, mb denote road boundary lines, and the reference symbols m1, m2 denote lane boundary lines. Note that in FIG. 5, the lane k1 is the recommended lane, and in FIG. 9, the lane k2 is the recommended lane.

In these cases, the image recognition processing portion of the guidance processing portion executes image recognition processing, reading in image data from the rear view camera 49 (FIG. 1) and, in this embodiment, recognizing in the image data, in an image field f1, the lane demarcation lines, which, in the examples in FIGS. 6 to 8, are the road boundary line ma and the lane boundary lines m1, m2. For that purpose, the angle of view of the rear view camera 49 in the horizontal direction, that is, the horizontal angle of view, is set only to a value that allows two or more lane demarcation lines to be recognized, which value, in this embodiment, allows two lane demarcation lines to be recognized.

Next, a host vehicle position inference processing portion of the guidance processing portion executes host vehicle position inference processing, inferring whether or not the host vehicle is in the recommended lane.

For that purpose, a straddling determination processing portion of the host vehicle position inference processing portion executes straddling determination processing, determining whether or not the host vehicle is straddling two specific lanes.

For example, as shown in FIGS. 6 to 8, in a case where the lane boundary line m 1 is present in the image field f1, the straddling determination processing portion determines from the position of the lane boundary line m1 whether or not the host vehicle is straddling the lanes k1, k2. Specifically, in the image field f1, the straddling determination processing portion computes a number of pixels NL from a left edge e1 to the lane demarcation line m1 and a number of pixels NR from a right edge e2 to the lane demarcation line m1, then computes a percentage, a position determination index $\gamma$, that expresses the ratio of the number of pixels NL to the total number of pixels NL, NR:

$$\gamma = (NL/(NL+NR)) \times 100\%$$

In a case where the position determination index $\gamma$ is not less than 10% and not greater than 90%, the straddling determination processing portion determines that the host vehicle is straddling the lanes k1, k2. In a case where the position determination index $\gamma$ is less than 10% or greater than 90%, the straddling determination processing portion determines that the host vehicle is not straddling the lanes k1, k2.

If it is determined that the host vehicle is straddling the lanes k1, k2, a condition fulfillment determination processing portion of the host vehicle position inference processing portion executes condition fulfillment determination processing, starting a built-in timer in the CPU 31 and reading the current position. The condition fulfillment determination processing portion then determines whether or not the conditions for determining a state of straddling the lanes k1, k2, that is, the determination conditions, have been fulfilled by determining whether or not the host vehicle has traveled while straddling the lanes k1, k2 while a pre-set specified time elapses and a pre-set specified distance is traveled.

Next, if the conditions are fulfilled and the host vehicle has traveled for the specified time and the specified distance while straddling the lanes k1, k2, a straddling state determination processing portion of the host vehicle position inference processing portion executes straddling state determination processing, determining in what sort of state the host vehicle is straddling the lanes k1, k2 at the point in time when determination conditions are fulfilled.

Specifically, if, as shown in shown in FIGS. 6A to 6C, the position determination index $\gamma$ is not less than 40% and not greater than 60%, the straddling state determination processing portion determines that the host vehicle is straddling the lanes k1, k2 equally. If, as shown in shown in FIGS. 7A to 7C, the position determination index $\gamma$ is greater than 60% and not greater than 90%, the straddling state determination processing portion determines that the host vehicle is straddling the lanes k1, k2 more to the left. If, as shown in shown in FIGS. 8A to 8C, the position determination index $\gamma$ is not less than 10% and less than 40%, the straddling state determination processing portion determines that the host vehicle is straddling the lanes k1, k2 more to the right.

Note that in the examples shown in FIGS. 6 to 8, the matter of whether or not the host vehicle is straddling the lanes k1, k2 and in what manner the host vehicle is straddling is determined according to the position of the lane boundary line m1, but the matter of whether or not the host vehicle is straddling the lanes k2, k3 and in what manner the host vehicle is straddling can be determined in the same manner according to the position of the lane boundary line m2.

Next, a host vehicle position determination processing portion of the host vehicle position inference processing portion executes host vehicle position determination processing, determining whether or not the host vehicle is in the recommended lane based on the fact that the lane was not specified by the lane specification processing, on the results of straddling determination processing, and on the results of straddling state determination processing.

If it is not clear whether or not the host vehicle is in the recommended lane (it might be or it might not be), or if the host vehicle is not in the recommended lane, a candidate lane computation processing portion of the host vehicle position inference processing portion executes candidate lane computation processing, computing the lanes that are candidates for where the host vehicle is inferred to be, that is, candidate lanes. In this case, on the three-lane road r1, if the vehicle is in one of the lanes k1 to k3, it is possible to specify the driving lane, so the candidate lane computation processing portion does not compute the candidate lanes. In contrast, if the vehicle is straddling the lanes k1, k2, or is straddling the lanes k2, k3, it is not possible to specify the driving lane. Therefore, the candidate lane computation processing portion computes the lanes k1 to k3 as the candidate lanes.

Also, on the four-lane road r2, if the vehicle is in the lane k1 or the lane k4, it is possible to specify the driving lane, so the candidate lane computation processing portion does not compute the candidate lanes. In contrast, if the vehicle is in the lane k2 or the lane k3, is straddling the lanes k1, k2, is straddling the lanes k2, k3, or is straddling the lanes k3, k4, it is not possible to specify the driving lane. Therefore, if the vehicle is in the lane k2 or the lane k3, the candidate lane computation processing portion computes the lanes k2, k3 as the candidate lanes. If the vehicle is straddling the lanes k1, k2, is straddling the lanes k2, k3, or is straddling the lanes k3, k4, the candidate lane computation processing portion computes the lanes k1 to k4 as the candidate lanes.

Next, a driving lane assumption processing portion of the guidance processing portion executes driving lane assumption processing, in which the system assumes that the candidate lane that is farthest from the recommended lane is the driving lane.

For example, in a case where the vehicle is straddling the lanes k1, k2 equally, as shown in FIG. 5 by the host vehicle position pr1, or is straddling the lanes k2, k3 equally, as shown in FIG. 5 by the host vehicle position pr2, the host vehicle position determination processing portion determines that the host vehicle is not in the recommended lane, and the candidate lane computation processing portion computes the lanes k1 to k3 as the candidate lanes. The driving lane assumption processing portion assumes that the lane k3 is the driving lane, because the lane k3 is the lane farthest from the lane k1, the recommended lane.

Next, the lane guidance processing portion starts lane guidance in the form of voice phrases, timing the start of the lane guidance based on the distance required for the vehicle to move from the lane k3 to the recommended lane, that is, the required movement distance Lx.

For example, in a case where the system will guide the host vehicle into the recommended lane, it is possible to set a point h1 at which the lane guidance will start, to set a point h2 where interim lane guidance will be executed 300 meters before the guidance intersection, and to compute a distance Lh1 from the point h1 to the guidance intersection as described below.

Specifically, when a unit movement distance required to move one lane is set to 250 meters, if the vehicle speed is 60 km/h, the per-second speed can be expressed as almost 17 meters per second. The required movement distance Lx is the distance required to move two lanes, from the lane k3 to the lane k1, so it is expressed as follows:

$$Lx = 2 \times 250 = 500 \text{ meters}$$

If the time required to output voice phrases to guide the host vehicle into the recommended lane, that is, a guidance time $\tau 1$, is 3 seconds, and, when the vehicle has entered the recommended lane, the time required to output voice phrases to the effect that the vehicle has entered the recommended lane, that is, a reporting time $\tau 2$, is 2 seconds,

then the distance Lh1 is expressed as follows:

$$Lh1 = 3 \times 17 + 500 + 2 \times 17 + 300 = 885 \text{ meters}$$

That is, the lane guidance must start at the point h1 885 meters before the guidance intersection.

In this case, it has been determined that the host vehicle is not in the recommended lane, so the guiding of the host vehicle into the recommended lane by means of lane guidance is executed in terms of an absolute position. Specifically, for example, a message such as "Turn left about 900 meters ahead. The farthest lane to the left is the recommended lane," or the like is output by voice. Also, thereafter, a message such as "The farthest lane to the left is the recommended lane," or the like is output by voice to guide the host vehicle to the recommended lane by voice once again. Moreover, it becomes possible to specify the driving lane as the host vehicle changes lanes, so when the host vehicle has entered the recommended lane, a message such as "You have entered the recommended lane," or the like is output by voice.

Also, in a case where the host vehicle is straddling the lanes k1, k2 equally, as shown in FIG 9 by the host vehicle position pr1, or is straddling the lanes k2, k3 equally, as shown in FIG. 9 by the host vehicle position pr2, the host vehicle position determination processing portion determines that the host vehicle is not in the recommended lane, and the candidate lane computation processing portion computes the lanes k1 to k3 as the candidate lanes. The driving lane assumption processing portion assumes that the lanes k1, k3 are the driving lanes, because the lanes k1, k3 are the lanes farthest from the lane k2, the recommended lane.

Therefore, the required movement distance Lx is the distance required to move one lanes, from the lanes k1, k3 to the lane k2, so it is expressed as follows:

$$Lx = 1 \times 250 = 250 \text{ meters}$$

The distance Lh1 is expressed as follows:

$$Lh1 = 3 \times 17 + 250 + 2 \times 17 + 300 = 635 \text{ meters}$$

That is, the lane guidance must start at the point h1 635 meters before the guidance intersection.

Note that, as described above, the driving lane cannot be specified, so the map display processing portion does not display the host vehicle position, as shown in FIG. 10.

Next, the flowchart will be explained.

At step S1, image recognition processing is executed.

At step S2, host vehicle position estimation processing is executed.

At step S3, driving lane assumption processing is executed.

At step S4, lane guidance processing is executed, and control is returned.

Next, a case will be explained in which the driving lane on the four-lane road r2 is assumed.

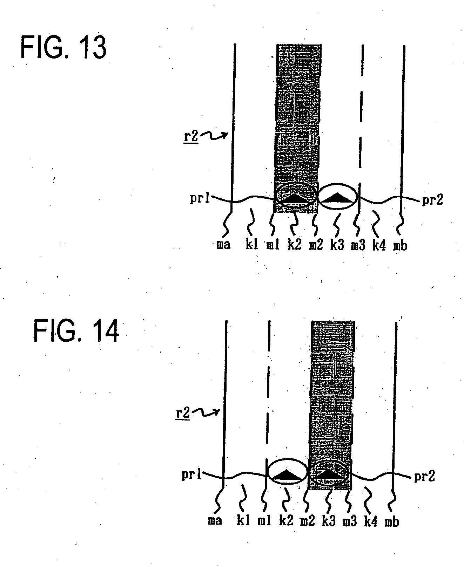

FIG. 11 is a third diagram showing a driving state of a vehicle according to the embodiment of the present invention. FIG. 12 is a fourth diagram showing a driving state of a vehicle according to the embodiment of the present invention. FIG. 13 is a fifth diagram showing a driving state of a vehicle according to the embodiment of the present invention. FIG. 14 is a sixth diagram showing a driving state of a vehicle according to the embodiment of the present invention.

In the diagrams, the reference symbol r2 denotes a road, the reference symbols k1 to k4 denote lanes, the reference symbols pr1, pr2 denote host vehicle positions, the reference symbols ma, mb denote road boundary lines, and the reference symbols m1 to m3 denote lane boundary lines. Note that in FIG. 11, the lane k1 is the recommended lane; in FIG. 12, the lane k4 is the recommended lane; in FIG. 13, the lane k2 is the recommended lane; in FIG. 14, the lane k3 is the recommended lane.

In these cases, the host vehicle position determination processing portion executes host vehicle position determination processing, determining whether or not the host vehicle is in the recommended lane based on the fact that the lane was not specified by the lane specification processing, on the results of straddling determination processing, and on the results of straddling state determination processing. The driving lane assumption processing portion assumes the driving lane, based on the determination of whether or not the host vehicle is in the recommended lane.

For example, in a case where the host vehicle is in the lane k2, as shown in FIG. 11 by the host vehicle position pr1, or where the host vehicle is in the lane k3, the host vehicle position determination processing portion determines that the host vehicle is not in the recommended lane, and the candidate lane computation processing portion computes the lanes k2, k3 as the candidate lanes. The driving lane assumption processing portion assumes that the lane k3 is the driving lane, because, of the lanes k2, k3, the lane k3 is the lane farthest from the lane k1, the recommended lane.

Next, the lane guidance processing portion starts lane guidance in the form of voice phrases, timing the start of the lane guidance based on the required movement distance Lx, the distance required for the vehicle to move from the lane k3 to the recommended lane.

For example, in a case where the system will guide the host vehicle into the recommended lane, the required movement distance Lx is the distance required to move two lanes, from the lane k3 to the lane k1, so it is expressed as follows:

$$\text{Lx} = 2 \times 250 = 500 \text{ meters}$$

Also, the distance Lh1 is expressed as follows:

$$\text{Lh1} = 3 \times 17 + 500 + 2 \times 17 + 300 = 885 \text{ meters}$$

That is, the lane guidance must start at the point h1 885 meters before the guidance intersection.

In this case, it has been determined that the host vehicle is not in the recommended lane, so the guiding of the host vehicle into the recommended lane by means of lane guidance is executed in terms of an absolute position. Specifically, for example, a message such as "Turn left about 900 meters ahead. The farthest lane to the left is the recommended lane," or the like is output by voice. Also, thereafter, a message such as "The farthest lane to the left is the recommended lane," or the like is output by voice to guide the host vehicle to the recommended lane by voice once again. Moreover, it becomes possible to specify the driving lane as the host vehicle changes lanes, so when the host vehicle has entered the recommended lane, a message such as "You have entered the recommended lane," or the like is output by voice.

Also, in a case where the host vehicle is in the lane k2, as shown in FIG 12 by the host vehicle position pr1, or where the host vehicle is in the lane k3, the host vehicle position determination processing portion determines that the host vehicle is not in the recommended lane, and the candidate lane computation processing portion computes the lanes k2, k3 as the candidate lanes. The driving lane assumption processing portion assumes that the lane k2 is the driving lane, because, of the lanes k2, k3, the lane k2 is the lane farthest from the lane k4, the recommended lane.

Next, the lane guidance processing portion starts lane guidance in the form of voice phrases, timing the start of the lane guidance based on the required movement distance Lx, the distance required for the vehicle to move from the lane k2 to the recommended lane.

For example, in a case where the system will guide the host vehicle into the recommended lane, the required movement distance Lx is the distance required to move two lanes, from the lane k2 to the lane k4, so it is expressed as follows:

$$\text{Lx} = 2 \times 250 = 500 \text{ meters}$$

Also, the distance Lh1 is expressed as follows:

$$\text{Lh1} = 3 \times 17 + 500 + 2 \times 17 + 300 = 885 \text{ meters}$$

That is, the lane guidance must start at the point h1 885 meters before the guidance intersection.

In this case, it has been determined that the host vehicle is not in the recommended lane, so the guiding of the host vehicle into the recommended lane by means of lane guidance is executed in terms of an absolute position. Specifically, for example, a message such as "Turn right about 900 meters ahead. The farthest lane to the right is the recommended lane," or the like is output by voice. Also, thereafter, a message such as "The farthest lane to the right is the recommended lane," or the like is output by voice to guide the host vehicle to the recommended lane by voice once again. Moreover, it becomes possible to specify the driving lane as the host vehicle changes lanes, so when the host vehicle has entered the recommended lane, a message such as "You have entered the recommended lane," or the like is output by voice.

Also, in a case where the host vehicle is in the lane k2, as shown in FIG. 13 by the host vehicle position pr1, or where the host vehicle is in the lane k3, the host vehicle position determination processing portion determines that it is unclear whether or not the host vehicle is in the recommended lane, and the candidate lane computation processing portion computes the lanes k2, k3 as the candidate lanes. The driving lane assumption processing portion assumes that the lane k3 is the driving lane, because, of the lanes k2, k3, the lane k3 is the lane farthest from the lane k2, the recommended lane.

Next, the lane guidance processing portion starts lane guidance in the form of voice phrases, timing the start of the lane guidance based on the required movement distance Lx, the distance required for the vehicle to move from the lane k3 to the recommended lane.

For example, in a case where the system will guide the host vehicle into the recommended lane, the required movement distance Lx is the distance required to move one lane, from the lane k3 to the lane k2, so it is expressed as follows:

$$Lx = 1 \times 250 = 250 \text{ meters}$$

Also, the distance Lh1 is expressed as follows:

$$Lh1 = 3 \times 17 + 250 + 2 \times 17 + 300 = 635 \text{ meters}$$

That is, the lane guidance must start at the point h1 635 meters before the guidance intersection.

In this case, it has been determined that the host vehicle is not in the recommended lane, so the guiding of the host vehicle into the recommended lane by means of lane guidance is executed in terms of an absolute position. Specifically, for example, a message such as "Turn left in 700 meters. The second lane from the left is the recommended lane," or the like is output by voice. Also, thereafter, a message such as "The second lane from the left is the recommended lane," or the like is output by voice to guide the host vehicle to the recommended lane by voice once again. Moreover, it becomes possible to specify the driving lane as the host vehicle changes lanes, so when the host vehicle has entered the recommended lane, a message such as "You have entered the recommended lane," or the like is output by voice.

Also, in a case where the host vehicle is in the lane k2, as shown in FIG. 14 by the host vehicle position pr1, or where the host vehicle is in the lane k3, the host vehicle position determination processing portion determines that it is unclear whether or not the host vehicle is in the recommended lane, and the candidate lane computation processing portion computes the lanes k2, k3 as the candidate lanes. The driving lane assumption processing portion assumes that the lane k2 is the driving lane, because, of the lanes k2, k3, the lane k2 is the lane farthest from the lane k3, the recommended lane.

Next, the lane guidance processing portion starts lane guidance in the form of voice phrases, timing the start of the lane guidance based on the required movement distance Lx, the distance required for the vehicle to move from the lane k2 to the recommended lane.

For example, in a case where the system will guide the host vehicle into the recommended lane, the required movement distance Lx is the distance required to move one lane, from the lane k2 to the lane k3, so it is expressed as follows:

$$Lx = 1 \times 250 = 250 \text{ meters}$$

Also, the distance Lh1 is expressed as follows:

$$Lh1 = 3 \times 17 + 250 + 2 \times 17 + 300 = 635 \text{ meters}$$

That is, the lane guidance must start at the point h1 635 meters before the guidance intersection.

In this case, it has been determined that the host vehicle is not in the recommended lane, so the guiding of the host vehicle into the recommended lane by means of lane guidance is executed in terms of an absolute position. Specifically, for example, a message such as "Turn right in 700 meters ahead. The third lane from the left is the recommended lane," or the like is output by voice. Also, thereafter, a message such as "The third lane from the left is the recommended lane," or the like is output by voice to guide the host vehicle to the recommended lane by voice once again. Moreover, it becomes possible to specify the driving lane as the host vehicle changes lanes, so when the host vehicle has entered the recommended lane, a message such as "You have entered the recommended lane," or the like is output by voice.

Note that in this case, the driving lane cannot be specified, so the map display processing portion does not display the host vehicle position.

Incidentally, on roads where the number of lanes is five or more, it is sometimes not possible to specify the driving lane as the host vehicle changes lanes, so in those cases, recommended lane entering guidance is not executed when the host vehicle has entered the recommended lane. It is also possible to cancel guidance to the recommended lane or to restrict the number of times that guidance is executed, so as not to repeat guidance to the recommended lane even though the host vehicle has entered the recommended lane. In a case where the number of times that guidance is executed is restricted, the time or the distance for determining whether or not the determination conditions have been fulfilled is lengthened.

Thus, in the embodiment of the present invention, the system can infer whether or not the host vehicle is in the recommended lane and, based on the inference results, assume the driving lane. Therefore, appropriate lane guidance can be executed, even in a case where the driving lane cannot be specified based on the driving history, a local feature, or the like.

In the embodiment of the present invention, in a case where the driving lane cannot be specified, the host vehicle position is not displayed, but it is possible to display a host vehicle position in each of the candidate lanes or to display a host vehicle position with enlarged dimensions, so that it extends over a plurality of candidate lanes.

Note that the present invention is not limited by the embodiment described above. Various modifications can be made based on the purpose of the present invention, and it is intended that all modifications within the scope of the appended claims be included.

A route guidance system includes a current position detection portion that detects a current position of a host vehicle as a host vehicle position; a route search processing portion that searches for a specified route to a destination, based on the host vehicle position; a recommended lane setting processing portion that sets a recommended lane based on the specified route; a host vehicle position inference processing portion that infers whether or not the host vehicle is in the recommended lane, based on image data of lane demarcation lines; a driving lane assumption processing portion that assumes that the lane in which the host vehicle is driving is the driving lane, based on the inference results of whether or not the host vehicle is in the recommended lane; and a lane guidance processing portion that executes lane guidance based on the assumed driving lane. Appropriate lane guidance can be executed, because the driving lane is assumed based on the inference results of whether or not the host vehicle is in the recommended lane.

**Claims**

1. A route guidance system, comprising:

   means (15, 18, 44) configured to detect a current position (pr1, pr2) of a host vehicle as a host vehicle position;
   means (31) configured to search for a specified route to a destination, based on the host vehicle position; and
   means (31) configured to set a recommended lane in which the host vehicle is recommended to drive, based on the specified route;
   **characterized by** further comprising
   means (31) configured to determine whether or not a lane in which the host vehicle is driving is specified, based on image data of lane demarcation lines that are photographed by a photography unit (49, 50);
   means (31) configured, in a case where the lane in which the host vehicle is driving is not specified, to compute candidate lanes in which the host vehicle is inferred to be;
   means (31) configured to assume that the candidate lane which is the farthest from the recommended lane among the candidate lanes is a driving lane; and
   means (31) configured to start lane guidance with timing determined based on the assumed driving lane and the recommended lane.

2. The route guidance system according to claim 1, further comprising means (31) configured to determine a state in which the host vehicle is straddling the lanes, wherein in a case where the state in which the host vehicle is straddling the lanes is determined, the means (31) configured to determine whether or not a lane in which the host vehicle is driving is specified is further configured to determine that the lane in which the host vehicle is driving is not specified.

3. The route guidance system according to claim 1, wherein the lane demarcation lines include road boundary lines, which are formed with solid lines on a shoulder side of a road and on a side toward an oncoming traffic lane, and lane boundary lines which are formed with broken lines between individual lanes in an area bounded by the road boundary lines,

wherein the means (31) configured to determine whether or not a lane in which the host vehicle is driving is specified is further configured, in case there are at least four lanes and only the lane boundary lines are recognized based on the image data of the lane demarcation lines that are photographed by the photography unit, to determine that the lane in which the host vehicle is driving is not specified.

4. A route guidance method, comprising the steps of:

detecting a current position (pr1, pr2) of a host vehicle as a host vehicle position;
searching for a specified route to a destination, based on the host vehicle position; and
setting a recommended lane in which the host vehicle is recommended to drive, based on the specified route;
**characterized by**
determining whether or not a lane in which the host vehicle is driving is specified, based on image data of lane demarcation lines that are photographed by a photography unit (49, 50);
computing, in a case where the lane in which the host vehicle is driving is not specified, candidate lanes in which the host vehicle is inferred to be;
assuming that the candidate lane which is the farthest from the recommended lane among the candidate lanes is a driving lane; and
starting lane guidance with timing determined based on the assumed driving lane and the recommended lane.

**Patentansprüche**

1. Routenführungssystem mit:

einer Einrichtung (15, 18, 44), die konfiguriert ist, eine derzeitige Position (pr1, pr2) eines Host-Fahrzeugs als eine Host-Fahrzeugposition zu erfassen;
einer Einrichtung (31), die konfiguriert ist, eine spezifizierte Route zu einem Ziel auf der Grundlage der Host-Fahrzeugposition zu suchen; und
einer Einrichtung (31), die konfiguriert ist, eine empfohlene Fahrspur, die dem Host-Fahrzeug empfohlen wird, um darin zu fahren, auf der Grundlage der spezifizierten Route einzustellen;
ferner **gekennzeichnet durch**
eine Einrichtung (31), die konfiguriert ist, auf der Grundlage von Bilddaten von Fahrspurabgrenzungslinien, die **durch** eine Fotographiereinheit (49, 50) fotographiert werden, zu bestimmen, ob eine Fahrspur, in der das Host-Fahrzeug fährt, spezifiziert ist oder nicht;
eine Einrichtung (31), die konfiguriert ist, in einem Fall, bei dem die Fahrspur, in der das Host-Fahrzeug fährt, nicht spezifiziert ist, Kandidatenfahrspuren zu berechnen, von denen gefolgert wird, dass das Host-Fahrzeug sich darin befindet;
eine Einrichtung (31), die konfiguriert ist anzunehmen, dass die Kandidatenfahrspur, die am Weistesten von der empfohlenen Fahrspur unter den Kandidatenfahrspuren weg ist, eine befahrene Fahrspur ist; und
eine Einrichtung (31), die konfiguriert ist, eine Fahrspurführung mit einer Zeitsteuerung zu starten, die auf der Grundlage der angenommenen befahrenen Fahrspur und der empfohlenen Fahrspur bestimmt wird.

2. Routenführungssystem nach Anspruch 1, ferner mit einer Einrichtung (31), die konfiguriert ist, einen Zustand zu bestimmen, in dem das Host-Fahrzeug in die Fahrspuren einfädelt, wobei in einem Fall, bei dem der Zustand, in dem das Host-Fahrzeug in die Fahrspuren einfädelt, bestimmt wird, die Einrichtung (31), die konfiguriert ist zu bestimmen, ob eine Fahrspur, in der das Host-Fahrzeug fährt, spezifiziert ist oder nicht, ferner konfiguriert ist zu bestimmen, dass die Fahrspur, in der das Host-Fahrzeug fährt, nicht spezifiziert ist.

3. Routenführungssystem nach Anspruch 1, wobei die Fahrspurabgrenzungslinien Straßenbegrenzungslinien, die mit durchgezogenen Linien auf einer Seitenstreifenseite einer Straße und auf einer Seite hin zu einer Fahrspur mit entgegenkommendem Verkehr gebildet sind, und Fahrspurbegrenzungslinien umfassen, die mit gestrichelten Linien zwischen einzelnen Fahrspuren in einem Bereich gebildet sind, der durch die Straßenbegrenzungslinien umfasst ist, wobei die Einrichtung (31), die konfiguriert ist zu bestimmen, ob eine Fahrspur, in der das Host-Fahrzeug fährt, spezifiziert ist oder nicht, ferner konfiguriert ist, in einem Fall, dass es zumindest vier Fahrspuren gibt und lediglich die Fahrspurbegrenzungslinien auf der Grundlage der Bilddaten der Fahrspurabgrenzungslinien erkannt sind, die durch die Fotographiereinheit fotographiert werden, zu bestimmen, dass die Fahrspur, in der das Host-Fahrzeug fährt, nicht spezifiziert ist.

**4.** Routenführungsverfahren mit Schritten zum:

Erfassen einer derzeitigen Position (pr1, pr2) eines Host-Fahrzeugs als eine Host-Fahrzeugposition;
Suchen einer spezifizierten Route zu einem Ziel auf der Grundlage der Host-Fahrzeugposition; und
Einstellen einer empfohlenen Fahrspur, für die empfohlen wird, dass das Host-Fahrzeug darin fährt, auf der Grundlage der spezifizierten Route;
**gekennzeichnet durch**
ein Bestimmen, ob eine Fahrspur, in der das Host-Fahrzeug fährt, spezifiziert ist oder nicht, auf der Grundlage von Bilddaten von Fahrspurabgrenzungslinien, die **durch** eine Fotographiereinheit (49, 50) fotographiert werden;
ein Berechnen in einem Fall, bei dem die Fahrspur, in der das Host-Fahrzeug fährt, nicht spezifiziert ist, von Kandidatenfahrspuren, von denen gefolgert wird, dass sich das Host-Fahrzeug darin befindet;
ein Annehmen, dass die Kandidatenfahrspur, die am Weitesten von der empfohlenen Fahrspur unter den Kandidatenfahrspuren entfernt ist, eine befahrene Fahrspur ist; und
ein Starten einer Fahrspurführung mit einer Zeitsteuerung, die auf der Grundlage der angenommenen befahrenen Fahrspur und der empfohlenen Fahrspur bestimmt wird.

**Revendications**

**1.** Système de guidage routier, comportant :

des moyens (15, 18, 44) configurés pour détecter une position courante (pr1, pr2) d'un véhicule hôte comme position de véhicule hôte ;
des moyens (31) configurés pour rechercher un itinéraire spécifié vers une destination, sur la base de la position de véhicule hôte ; et
des moyens (31) configurés pour déterminer une voie recommandée dans laquelle il est recommandé de conduire le véhicule hôte, sur la base de l'itinéraire spécifié ;
**caractérisé en ce qu'**il comporte en outre
des moyens (31) configurés pour déterminer si une voie dans laquelle le véhicule hôte est conduit est spécifiée, sur la base de données d'image des lignes de délimitation de voie qui sont photographiées par une unité de photographie (49, 50) ;
des moyens (31) configurés, dans un cas où la voie dans laquelle le véhicule hôte est conduit n'est pas spécifiée, pour calculer des voies candidates dans lesquelles le véhicule hôte est supposé être ;
des moyens (31) configurés pour supposer que la voie candidate qui est la plus éloignée de la voie recommandée parmi les voies candidates est une voie de conduite ; et
des moyens (31) configurés pour commencer le guidage de voie avec une temporisation déterminée sur la base de la voie de conduite supposée et de la voie recommandée.

**2.** Système de guidage routier selon la revendication 1, comportant en outre des moyens (31) configurés pour déterminer un état dans lequel le véhicule hôte chevauche les voies, dans lequel dans un cas où l'état dans lequel le véhicule hôte chevauche les voies est déterminé, les moyens (31) configurés pour déterminer si une voie dans laquelle le véhicule hôte conduit est spécifiée ou non sont en outre configurés pour déterminer que la voie dans laquelle le véhicule hôte est conduit n'est pas spécifiée.

**3.** Système de guidage routier selon la revendication 1, dans lequel les lignes de délimitation de voie comprennent des lignes de limite de route, qui sont formées avec des lignes continues sur un côté d'accotement d'une route et sur un côté vers une voie de trafic entrant, et des lignes de limite de voie qui sont formées avec des lignes discontinues entre des voies individuelles dans une zone délimitée par les lignes de limite de route,
dans lequel les moyens (31) configurés pour déterminer si une voie dans laquelle le véhicule hôte est conduit est spécifiée ou non sont en outre configurés, dans cas où il y a au moins quatre voies et seulement les lignes de limite de voie sont reconnues sur la base des données d'image des lignes de délimitation de voie qui sont photographiées par l'unité de photographie, pour déterminer que la voie dans laquelle le véhicule hôte est conduit n'est pas spécifiée.

**4.** Procédé de guidage routier, comportant les étapes de :

détection d'une position courante (pr1, pr2) d'un véhicule hôte comme position de véhicule hôte ;
recherche d'un itinéraire spécifié vers une destination, sur la base de la position de véhicule hôte ;

et

détermination d'une voie recommandée dans laquelle il est recommandé de conduire le véhicule hôte, sur la base de l'itinéraire spécifié ;

**caractérisé par** le fait de

déterminer si une voie dans laquelle le véhicule hôte conduit est spécifiée ou non, sur la base de données d'image de lignes de délimitation de voie qui sont photographiées par une unité de photographie (49, 50) ;

calculer, dans un cas où la voie dans laquelle le véhicule hôte est conduit n'est pas spécifiée, les voies candidates dans lesquelles le véhicule hôte est supposé être ;

supposer que la voie de candidat qui est la plus éloignée de la voie recommandée parmi les voies candidates est une voie de conduite ; et

commencer le guidage de voie avec une temporisation déterminée sur la base de la voie de conduite supposée et la voie recommandée.

FIG. 1

**1 4** NAVIGATION UNIT

- **1 5** GPS SEN-SOR
- **1 8** DIRECTION SENSOR
- **1 6** DATA STORAGE PORTION

**1 7** NAVIGATION PROCESSING PORTION

- **3 1** C P U
- **3 2** R A M
- **3 3** R O M

**4 4** VEHICLE SPEED SENSOR

**6 3** NETWORK

**5 1** INFORMATION CENTER

**5 3**
- **5 5** R A M
- **5 6** R O M
- **5 4** C P U
- **5 7** COMMUNICATIONS PORTION
- **5 8** D B

- **1 0** AUTOMATIC TRANSMISSION CONTROL PORTION
- **4 8** FORWARD MONITORING UNIT
- **4 9** REAR VIEW CAMERA
- **4 2** ACCELERATOR SENSOR
- **4 3** BRAKE SENSOR
- **5 0** FRONT VIEW CAMERA

- **3 4** OPERATION PORTION
- **3 5** DISPLAY PORTION
- **3 6** VOICE INPUT PORTION
- **3 7** VOICE OUTPUT PORTION
- **3 8** COMMUNICATIONS PORTION

FIG. 2

r1

ma  k1 m1 k2 m2 k3 mb

FIG. 3

r2

ma  k1 m1 k2 m2 k3 m3 k4 mb

FIG. 4

```
            ( START )
                │
│ IMAGE RECOGNITION PROCESSING │  S 1
                │
│   HOST VEHICLE POSITION       │
│   ESTIMATION PROCESSING       │  S 2
                │
│ DRIVING LANE ASSUMPTION PROCESSING │  S 3
                │
│   LANE GUIDANCE PROCESSING    │  S 4
                │
            ( RETURN )
```

FIG. 5

ma  k1  ml  k2  m2  k3  mb

FIG. 6

(a)

(b)

(c)

FIG. 7

(a)

(b)

(c)

FIG. 8

(a)

e1
k1
m1

f1
e2
k2

(b)

e1
k1
m1

f1
m2
e2
k2

(c)

e1
k1
m1

f1
m2
e2
k2

FIG. 9

r1
pr1
pr2

ma  k1  m1  k2  m2  k3  mb

FIG. 10

ma  k1  m1  k2  m2  k3  mb

FIG. 11

ma  k1  m1  k2  m2  k3  m3  k4  mb

FIG. 12

ma  k1  m1  k2  m2  k3  m3  k4  mb

FIG. 13

r2

pr1                                                                pr2

ma   k1  m1 k2  m2 k3 m3 k4 mb

FIG. 14

r2

pr1                                                                pr2

ma   k1  m1 k2  m2 k3 m3 k4 mb

**REFERENCES CITED IN THE DESCRIPTION**

**Patent documents cited in the description**

- EP 1548404 A